# EUROPÄISCHE PATENTSCHRIFT

(11) **EP 1 911 858 B1**
(45) Veröffentlichungstag und Bekanntmachung des Hinweises auf die Patenterteilung: **11.07.2012**
(21) Anmeldenummer: 07107447.0
(22) Anmeldetag: 03.05.2007
(51) Int. Cl.: C23C 4/12, C23C 4/10, C04B 35/634, C04B 35/01, F01D 5/28

(54) **Verfahren zur Herstellung einer Beschichtung mit kolumnarer Struktur**
Process of manufacturing of a coating with columnar structure
Procédé de fabrication d'un revêtement à structure colonnaire

(30) Priorität: 02.10.2006 EP 06121637
(43) Veröffentlichungstag der Anmeldung: 16.04.2008
(73) Patentinhaber: Sulzer Metco AG, 5610 Wohlen (CH)
(72) Erfinder: Damani, Dr., Rajiv J., 8404 Winterthur (CH); Refke, Dr., Arno, 5507 Mellingen (CH)
(74) Vertreter: Sulzer Management AG

(56) Entgegenhaltungen:
- EP-A- 1 479 788
- WO-A-02/45931
- REFKE A ET AL: "CHARACTERIZATION OF LPPS PROCESSES UNDER VARIOUS SPRAY CONDITIONS FOR POTENTIAL APPLICATIONS" PROCEEDINGS OF THE INTERNATIONAL THERMAL SPRAY CONFERENCE 2003, 2003, Seiten 581-588, XP008072295
- TUCKER JR., R C: "Considerations in the Selection of Coatings" ADVANCED MATERIALS & PROCESSES, Bd. 162, Nr. 3, März 2004 (2004-03), Seiten 25-28, XP002439374 ASM International, Materials Park, [US]
- STÖVER D ET AL: "Plasma-sprayed components for SOFC applications" SURFACE & COATINGS TECHNOLOGY ELSEVIER, Bd. 201, Nr. 5, 21. Juni 2006 (2006-06-21), Seiten 2002-2005, XP002423788 [CH] ISSN: 0257-8972
- PEREDNIS D ET AL: "Solid oxide fuel cells with electrolytes prepared via spray pyrolysis" SOLID STATE IONICS, NORTH HOLLAND PUB. COMPANY. AMSTERDAM, NL, Bd. 166, Nr. 3-4, 30. Januar 2004 (2004-01-30), Seiten 229-239, XP004494040 ISSN: 0167-2738

## Beschreibung

Die Erfindung betrifft ein Verfahren zum Herstellen einer Beschichtung mit kolumnarer Struktur gemäss Oberbegriff von Anspruch 1.

Grosse Flächen können mit einem besonderen LPPS- Prozess ("Low Pressure Plasma Spraying - Process"), nämlich einem LPPS-TF-Prozess ("LPPS - Thin Film - Process") gleichmässig mit dünnen Schichten versehen werden. Dieser Prozess, bekannt beispielsweise aus der US-A- 5 853 815, ist ein Plasmaspritzverfahren. Die Herstellung einer einheitlichen Beschichtung wird durch eine Spritzpistole erreicht, die geometrisch geeignet ausgestaltet ist. Ein zu beschichtendes Substrat wird in eine Prozesskammer gebracht, in der ein Druck kleiner als 10 kPa hergestellt ist, während in der Spritzpistole beispielsweise ein Druck von rund 100 kPa (ungefähr Umgebungsdruck) herrscht. Das Druckgefälle zwischen dem Inneren der Spritzpistole und der Prozesskammer bewirkt, dass der thermische Prozessstrahl zu einem breiten Strahl expandiert, in dem das zu spritzende Material gleichmässig verteilt ist: Dies ist ein thermischer Prozessstrahl, der durch die Flamme eines defokussierenden Plasmastrahls erzeugt wird. Mittels einem solcherart aufgeweiteten Prozessstrahl kann auf einer relativ grossen Fläche in einem einzelnen Durchgang eine dichte Lage deponiert werden Durch mehrfache Deposition solcher Lagen sind Beschichtungen mit besonderen Eigenschaften erzeugbar. Insbesondere lassen sich Beschichtungsdicken im Mikrometerbereich erzeugen.

Bei einem besonderen LPPS-TF-Prozess wird mit dem thermischen Prozessstrahl ein hybrides Beschichten durchgeführt. Dieser Prozess, der aus der EP-A- 1 034 843 (= P.7192) oder der EP-A- 1 479 788 (= P.7328) bekannt ist, erlaubt, ein thermisches Spritzen mit einer Dampfphasenabscheidung zu kombinieren und so die Möglichkeiten der beiden Verfahren zu vereinigen. Die Eigenschaften des Prozessstrahls sind durch steuerbare Prozessparameter bestimmt, insbesondere durch die Parameter Druck, Enthalpie, Zusammensetzung eines Prozessgasgemisches und Zusammensetzung sowie Applikationsform des zu spritzenden Materials. Mit dem hybriden Beschichtungsverfahren lässt sich eine Wärmedämmschicht (TBC) mit einer kolumnaren Mikrostruktur herstellen. Diese Schicht oder Lage setzt sich angenähert aus zylindrischen oder spindelförmigen Körperchen zusammen, deren Zentralachsen senkrecht zur Substratoberfläche ausgerichtet sind. Diese kolumnare Lage mit anisotroper Mikrostruktur ist dehnungstolerant gegenüber einer thermischen Wechselbelastung, d.h. wechselnden Spannungen, die sich aufgrund von wiederholt auftretenden Temperaturänderungen ergeben. Die Beschichtung reagiert auf die wechselnden Spannungen auf eine weitgehend reversible Weise, d.h. ohne eine Ausbildung von Rissen, so dass ihre Lebensdauer beträchtlich verlängert ist im Vergleich mit der Lebensdauer einer Beschichtung, die keine kolumnare Mikrostruktur hat.

Das beschriebene Plasmaspritzverfahren ist ein bevorzugtes Beschichtungsverfahren. Statt eines Plasmastrahls könnte auch ein anderer thermischer Prozessstrahl verwendet werden, um eine Beschichtung mit kolumnarer sowie dichter Struktur herzustellen, falls sich mit einem solchen thermischen Prozessstrahl das Beschichtungsmaterial verdampfen lässt. Die im folgenden beschriebene Erfindung schliesst diese Verallgemeinerung ein. Beispiele für weitere thermische Prozessstrahlen sind: Elektronenstrahlen, Flammen reaktiver Gasgemische, elektrische Lichtbögen, Laserstrahlen.

Aufgabe der Erfindung ist es, ein Verfahren zum Herstellen einer Beschichtung mit kolumnarer Struktur zu schaffen, bei dem eine notwendige Verdampfung von Beschichtungsmaterial und Deposition effizienter als bei den bekannten Verfahren durchführbar ist. Diese Aufgabe wird durch das im Anspruch 1 definierte Verfahren gelöst.

Beim Verfahren zum Herstellen einer Beschichtung (10) mit kolumnarer, vorzugsweise dichter Struktur wird ein Beschichtungsmaterial in Form von primären Korpuskeln (1) mit einem Trägergas in einen thermischen Prozessstrahl injiziert. Das Beschichtungsmaterial wird im Prozessstrahl in eine Dampfphase überführt sowie als Kondensat in Form einer kolumnaren Beschichtung auf einem Substrat (100) abgeschieden. Die primären Korpuskeln sind jeweils durch ein Haufwerk von Partikeln gebildet, die durch Kohäsionskräfte eines verbindenden Mediums oder durch Adhäsionskräfte zusammen gehalten werden. Die primären Korpuskeln werden im Prozessstrahl durch mechanische und thermische Wechselwirkung desintegriert. Dabei werden die Partikel dispergiert, so dass Beschichtungsmaterial durch thermisches Einwirken auf die einzelnen Partikel ganz oder zu einem Teil verdampft wird.

Die abhängigen Ansprüche 2 bis 13 betreffen vorteilhafte Ausführungsformen des erfindungsgemässen Verfahrens.

Nachfolgend wird die Erfindung anhand der Zeichnungen erläutert. Es zeigen:
- Fig. 1: einen Ausschnitt aus einer Beschichtung, die mit dem erfindungsgemässen Verfahren hergestellt wurde,
- Fig. 2: eine schematische Darstellung eines Agglomerats, das ein aus Partikeln zusammengesetztes Korpuskel ist,
- Fig. 3: eine Illustration zur Desintegration des Agglomerats,
- Fig. 4: eine gemessene Grössenverteilung der Korpuskeln eines erfindungsgemässen Spritzpulvers,
- Fig. 5: ein Segment einer Turbine mit zwei Turbinenschaufeln, und
- Fig. 6: einen Schnitt durch das Segment in Fig. 4 parallel zur Grundplatte.

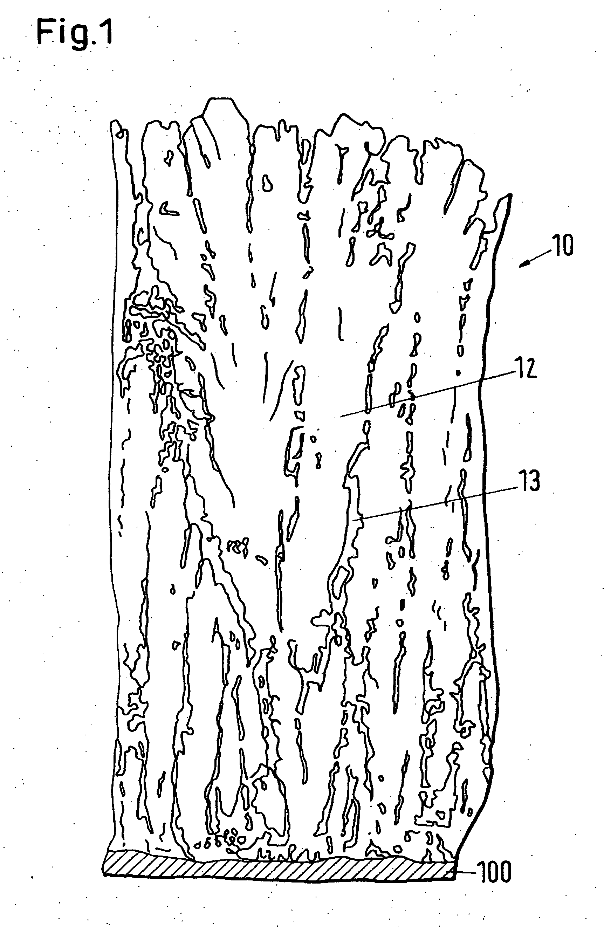

Beim Beispiel einer mit einem Plasmaspritzverfahren erfindungsgemäss hergestellten Beschichtung 10, die in Fig. 1 als schmaler Ausschnitt dargestellt ist, hat die auf einem Substrat 100 aufgebrachte Beschichtung 10 eine Dicke von ungefähr einem Drittel Millimeter. Der abgebildete Ausschnitt ist nach einem Schliffbild gezeichnet. Zwischen länglichen Zonen 12, deren Achsen im Wesentlichen senkrecht zum Substrat 100 stehen, liegen in Richtung der Achsen spaltförmige Lücken 13, die charakteristisch für eine kolumnare Struktur sind. Zwischen den Lücken 13 ist das Beschichtungsmaterial in einem Zustand, der dank einer geringen Porosität dicht ist. Die auf die gesamte Beschichtung 10 bezogene Porosität ist kleiner als 10 bis 15%.

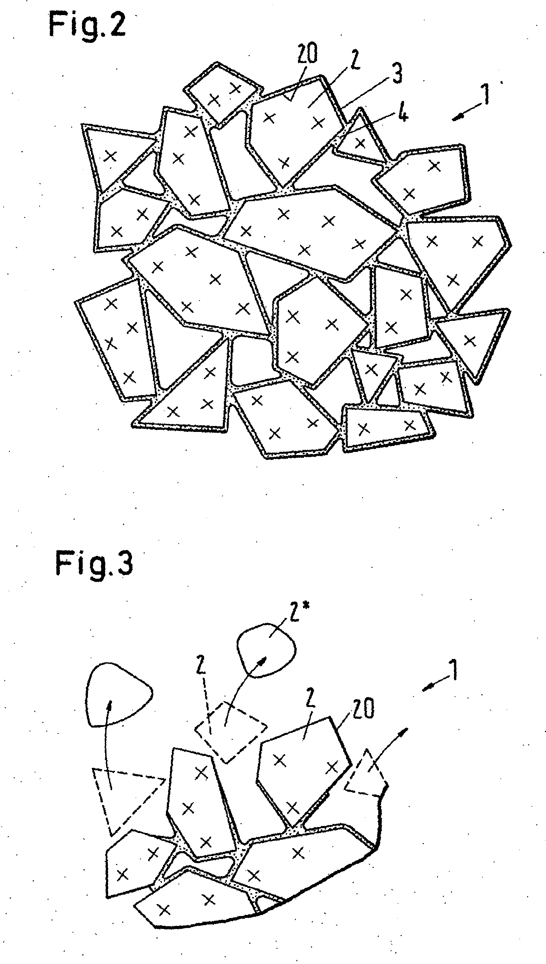

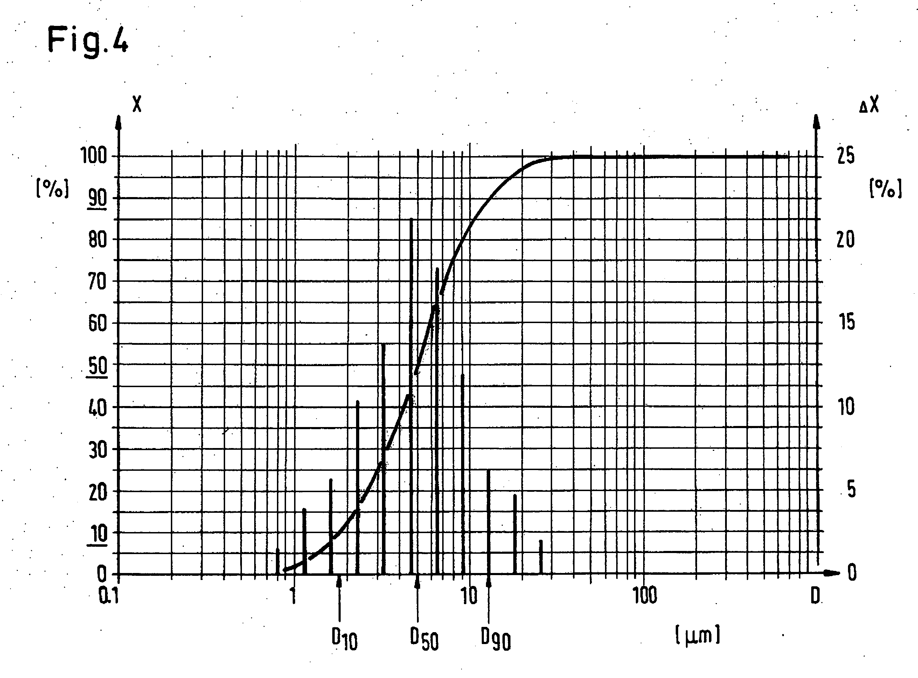

Diese Beschichtung 10 ist mit einem Spritzpulver erzeugt worden, das die in Fig. 4 dokumentierte Grössenverteilung von Korpuskeln 1 aufweist. Die Korpuskeln 1 sind aus Partikeln 2 zu einem Agglomerat zusammengesetzt, wie dies in Fig. 2 schematisch dargestellt ist. Die Darstellung zeigt ein zweidimensionales Model einer Korpuskel 1. Die als Polygone gezeichneten Partikel 2 stellen Körner dar, die beispielsweise aus homogenen Festkörpern durch Brechen und Mahlen erzeugt worden sind. Die Korpuskeln 1 sind jeweils durch ein Haufwerk (Agglomerat) von Partikeln 2 gebildet, die durch Kohäsionskräfte 4 eines verbindenden Mediums 3 (Binder) zusammen gehalten werden. Das Medium 3 liegt als dünner Film auf den Oberflächen der Partikel 2 und als Kohäsionskräfte 4 vermittelnden Brücken zwischen den Partikeln 2 vor.

Beim Plasmaspritzverfahren zum Herstellen der Beschichtung 10 mit kolumnarer sowie dichter Struktur wird der thermische Prozessstrahl durch eine Flamme eines defokussierenden Plasmastrahls erzeugt (vgl. EP-A- 1 034 843). Ein Beschichtungsmaterial wird in Form der Korpuskeln 1 mit einem Trägergas in den Plasmastrahl injiziert. Die Eigenschaften des Plasmastrahls sind durch einstellbare Prozessparameter bestimmt, insbesondere durch die Parameter Prozessdruck, Enthalpie und Zusammensetzung eines Prozessgasgemisches. Das erfindungsgemässe Verfahren lässt sich auch mit anderen thermischer Prozessstrahlen als dem Plasmastrahl durchführen. Eine weitere Verallgemeinerung betrifft die Form der Korpuskeln 1. Es werden primäre Korpuskeln von sekundären unterschieden:

Die primären Korpuskeln 1 sind durch Flüssigkeitströpfchen (nicht erfindungsgemäß) oder jeweils durch ein Haufwerk von Partikeln 2 gebildet, die durch Kohäsionskräfte 4 eines verbindenden Mediums 3 (Binder) oder durch Adhäsionskräfte zusammen gehalten werden. Die Adhäsionskräfte werden ohne einen Binder direkt zwischen den Partikeln ausgeübt, wobei ein mechanisches Ineinandergreifen von Oberflächenstrukturen (beispielsweise Dendriten) diese Kräfte bewirken können. Binderfreie Verbindungen zwischen den Partikeln 2 können auch durch Kalzinieren bei einer niedrigen Kalziniertemperatur und/oder kurzen Behandlungsdauer erzeugt werden. Bei dieser Temperatur bzw. Dauer bilden sich an Berührungspunkten zwischen den Partikeln 2 schwache Sinterverbindungen aus, die auch als Adhäsionskräfte verstanden werden können.

Die nicht erfindungsgemäßen, tröpfchenartigen Korpuskeln 1 enthalten eine chemische Vorstufe des Beschichtungsmaterials in Form einer Salzlösung, die durch thermische Einwirkung im Prozessstrahl in die sekundären, Partikel enthaltenden Korpuskeln umgewandelt werden. Ein solches Salz ist beispielsweise Zirkoniumnitrat, das unter Abspaltung von Stickoxiden in Zirkoniumoxid umgewandelt wird.

Die primären bzw. sekundären Korpuskeln werden im Prozessstrahl durch mechanische und thermische Wechselwirkung desintegriert und die Partikel dispergiert, so dass Beschichtungsmaterial durch thermische Einwirkung auf die einzelnen Partikel geschmolzen und ganz oder zu einem Teil verdampft wird. Durch die thermische Wechselwirkung ergibt sich ein thermisches Zersetzen oder Verdampfen des verbindenden Mediums 3. Die Desintegration der Korpuskeln 1 veranschaulicht Fig. 3. An den Oberflächen 20 der peripheren Partikeln 2 wird das Medium 3 thermisch eliminiert, so dass die Partikel 2 durch mechanische Wechselwirkung abgetrennt und als dispergierte Partikel 2* durch die Flamme effizient verdampft werden können. Die mechanische Wechselwirkung ergibt sich aufgrund der Viskosität des Plasmas durch Scherkräfte zwischen dem Plasma und den Korpuskeln 1.

Das Spritzpulver des Plasmaspritzverfahrens ist eine Schüttung der primären Korpuskeln 1, die jeweils durch ein Haufwerk oder Agglomerat der Partikel 2 gebildet sind. Diese primären Korpuskeln 1 können durch Versprühen eines Schlickers (engl. slurry oder slip) erzeugt werden. Es wird der Schlicker aus den Partikeln 2, einer Flüssigkeit, einem Binder sowie, falls erforderlich, einem Dispergiermittel hergestellt. Der versprühte Schlicker wird getrocknet und das sprühgetrocknete Material als Spritzpulver verwendet (wobei in der Regel eine Nachbehandlung durch weiteres Zerkleinern und Sieben nötig ist). Der Binder ist bei hoher Verdünnung in der Flüssigkeit des Schlickers gelöst worden, so dass die nach dem Trocknen durch den Binder erzeugten Kohäsionskräfte 4 lediglich einen minimalen Zusammenhalt der Partikel bewirken. Die Desintegrierbarkeit der Korpuskeln 1 im Prozessstrahl ist dadurch realisierbar.

Sprühgetrocknetes Spritzpulver kann beispielsweise folgendermassen hergestellt werden. Pulverförmiges Beschichtungsmaterial wird mit einer geeigneten Flüssigkeit, vorzugsweise deionisiertem Wasser, und einem organischen Binder zu einem Schlicker aufgeschlämmt. CMC (Carboxymethylcellulose) ist ein bevorzugter Binder. Jedoch können auch andere bekannte Binder verwendet werden, beispielsweise PVA (Polyvinylalcohol) or MC (Methylcellulose). Bei einer bevorzugten Ausführungsform des Schlickers beträgt in diesem der Binderanteil zwischen ungefähr 0.5 und 5 Gew%, bezogen auf das Trockengewicht des Beschichtungsmaterials. Die Viskosität des Schlickers beeinflusst die Grösse der sprühgetrockneten Korpuskeln, so dass diese Grösse einfach durch Ändern des Flüssigkeitsanteils variiert werden kann. Der Schlicker ist eine Suspension, die mit einem Dispergiermittel stabilisiert werden kann, beispielsweise mit "Nopcosperse" (rund 2 Gew%).

Das pulverförmige Beschichtungsmaterial kann durch Brechen eines in Blockform vorliegenden Materials gewonnen werden, das beispielsweise aus einem chemisch sowie durch Ausfällung erzeugten und anschliessend gesinterten Pulvers hergestellt ist. Das so gewonnene Pulver besteht aus kantigen Körnern, die wesentlich kompakter als die Partikel des ursprünglichen Pulvers sind. Die Kompaktifizierung kann in einem Induktionsofen oder in einem elektrischen Lichtbogen vorgenommen werden.

Die Grössenverteilung der primären Korpuskeln 1 im Diagramm der Fig. 4 ist durch eine glockenförmige Kurve darstellbar. (X = kumulierte Volumenanteile; ΔX = differentielle Volumenanteile). Diese Kurve lässt sich durch drei Parameter charakterisieren, nämlich die maximalen Durchmesser Dᵢ (i = 10, 50, 90) für die Volumenanteile X10%, X50% und X90%, die jeweils 10, 50 bzw. 90 Volumenprozent der primären Korpuskeln 1 umfassen.

Für die Durchmesser eines erfindungsgemässen Spritzpulvers und die entsprechenden Volumenanteile gelten folgende Bereiche: für X10%: D₁₀ < 10 µm; für X50%: D₅₀ < 20 µm; für X90%: D₉₀ < 40 µm. In Fig. 4 ist D₁₀ = 1.83 µm, D₅₀ = 4.94 µm und D₉₀ = 12.60 µm.

Es ist wesentlich für die Erfindung, dass die primären Korpuskeln 1 nicht zu gross sind. Die Korpuskeln 1 dürfen auch nicht zu klein sein, damit das Injizieren in den Prozessstrahl ohne Komplikationen erfolgen kann. Die Durchmesser sollen kleiner als 35 µm - entspricht rund - 400 mesh - und grösser als rund 5 µm sein. Für die Partikel 2 der primären Korpuskeln 1 liegen die Durchmesser im Bereich zwischen 0.1 und 5 µm. Im Extremfall kann eine primäre Korpuskel 1 aus lediglich einem Partikel 2 bestehen.

Es werden drei Möglichkeiten unterschieden, wie das Beschichtungsmaterial sich in den Prozessstrahl injizieren lässt: **I)** in Form von Schlickertröpfchen, **II)** nicht erfindungsgemäß in Form von Tröpfchen der oben erläuterten Salzlösung und **III)** als Spritzpulver in Form von festen Agglomeraten. Es gilt dabei insbesondere:
**I)** Im Fall der Schlickertröpfchen bilden Kapillarkräfte einer Flüssigkeit die Kohäsionskräfte. Dabei ist diese Flüssigkeit, die in der Regel ein Dispergiermittel (aber keinen Binder) enthält, zu einer Aufschlämmung der Partikel und Erzeugung des Schlickers verwendet worden. Das Versprühen des Schlickers wird unmittelbar vor dem Eintrag in den Plasmastrahl ausgeführt.
**II)** Das Versprühen der Salzlösung wird unmittelbar vor dem Eintrag in den Prozessstrahl ausgeführt, so dass die Partikel der sekundären Korpuskeln im Prozessstrahl erzeugt werden.
**III)** Wird das Beschichtungsmaterial als Spritzpulver verwendet, so soll der Binderanteil nach dem Trocknen der Schlickertröpfchen maximal 5 Gew% und minimal 0.5 Gew% betragen. Vorzugsweise liegt der Binderanteil im Bereich zwischen 1 und 2 Gew%.

Für den Schlicker können beispielsweise folgende Stoffe verwendet werden:
als Flüssigkeit entmineralisiertes Wasser oder ein organisches Lösungsmittel, insbesondere ein Alkohol;
als Dispergiermittel Polycarbonsäure, eine Polycarboxylat- oder Polymetacarboxylatverbindung, Polyethylenimine oder ein Aminoalkohol;
und als Binder Polyvinylalkohol, Polyvinylpyrolidin, Polysacharid, Acryl-polymere und Copolymere, Stärke, Polyvinylpropylen, Polyethylenglykole oder eine Celluloseverbindung, beispielsweise Carboxymethylcellulose, Methylcellulose oder Hydroxyethylcellulose.

Wird das erfindungsgemässe Verfahren als Plasmaspritzverfahren durchgeführt, so geschieht dies gemäss folgenden Spezifikationen:
a) Für den Prozessdruck wird ein Wert zwischen 50 und 5000 Pa, vorzugsweise zwischen 100 und 500 Pa, gewählt. Die spezifische Enthalpie des Plasmastrahls wird durch Abgabe einer effektiven Leistung erzeugt, die empirisch zu ermitteln ist und die erfahrungsgemäss im Bereich von 20 bis 100 kW, vorzugsweise 40 bis 80 kW liegt.
b) Das Prozessgas umfasst ein Gemisch von Inertgasen, insbesondere ein Gemisch von Argon Ar und Helium He, und ferner gegebenenfalls Wasserstoff, Stickstoff und/oder ein reaktives Gas, wobei das Volumenverhältnis von Ar zu He vorteilhafterweise im Bereich von 2 : 1 bis 1 : 4 liegt, und der Gesamtgasfluss im Bereich von 30 bis 150 SLPM liegt.
c) Die primären Korpuskeln 1 werden mit einer Förderrate zwischen 5 und 60 g/min, vorzugsweise zwischen 10 und 40 g/min injiziert.
d) Vorzugsweise wird das Substrat während des Materialauftrags relativ zu einer Wolke des verdampften Beschichtungsmaterials bewegt, insbesondere mit Dreh- oder Schwenkbewegungen und/oder mit translatorischen Bewegungen.

Es wird ein Beschichtungsmaterial verwendet, dessen verdampfbarer Anteil mindestens 70 % beträgt. Der Plasmastrahl wird mit ausreichend hoher spezifischer Enthalpie erzeugt, so dass beim Verdampfen mindestens 5 %, vorzugsweise mindestens 50 % des Beschichtungsmaterials in die Dampfphase übergeht.

Die Partikel 2 bilden in den primären Korpuskeln 1 eine homogene oder heterogene Mischung mit gleichen bzw. ungleichen Werkstoffen.

Die Partikel 2 können eine Mischung von Stoffen bilden, die im Prozessstrahl nach dem Verdampfen zumindest teilweise mit einander oder mit einem reaktiven Gas des Prozessgasgemisches chemisch reagieren. Die Reaktionsprodukte werden beim Beschichten auskondensiert.

Beim Herstellen eine kolumnar strukturierten TBC-Beschichtung entsteht eine vorteilhafte Verbindung der Beschichtung mit dem Substrat, auf das die kolumnare Beschichtung aufgebracht wird. Während man bei nichtkolumnaren Beschichtungen ein durch thermische Wechselbelastung bewirktes grossflächiges Abplatzen der Beschichtungen beobachtet, führt die gleiche thermische Wechselbelastung bei der kolumnaren Beschichtung zu einer milderen Beschädigung: Es entsteht ein schuppenartiges Abfallen von relativ kleinflächigen Beschichtungsinseln.

Bei einer bevorzugten Verfahrensführung werden Bereiche des Substrats 100 beschichtet, die sich im geometrischen Schatten des Prozessstrahls befinden.

Üblicherweise sind thermische Spritzverfahren sogenannte "line-of-sight-Prozesse", das heisst, das Substrat 100 wird nur dort beschichtet, wo der thermische Prozessstrahl direkt auftrifft. Bereiche, die sich im geometrischen Schatten befinden, also nicht direkt dem Prozessstrahl ausgesetzt sind, werden bei solchen Verfahren nicht beschichtet.

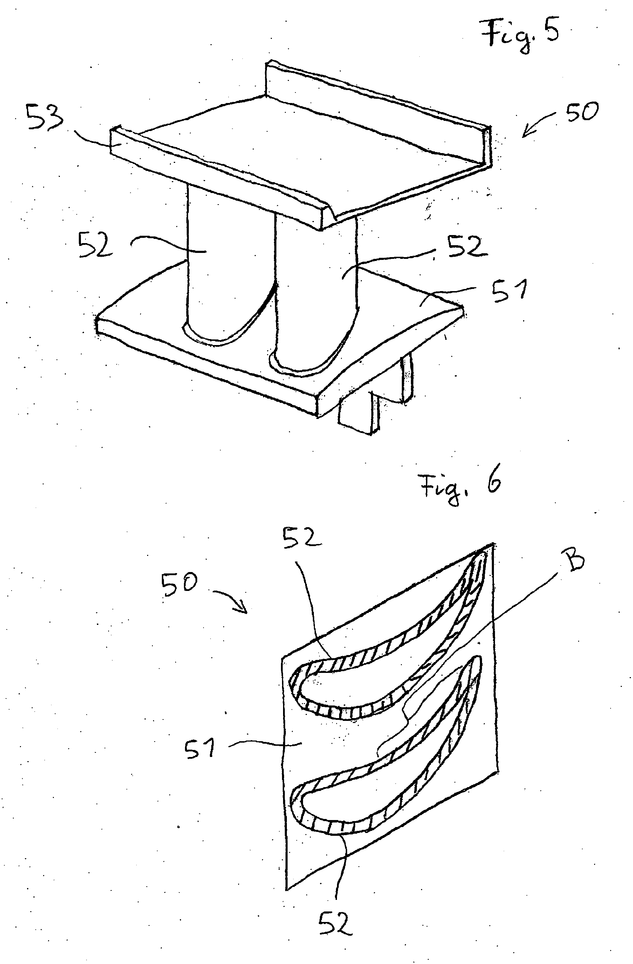

Mit dem erfindungsgemässen Verfahren ist es jedoch auch möglich, Bereiche des Substrats 100 zu beschichten, die nicht direkt - im geometrischen Sinne - dem Prozessstrahl ausgesetzt sind. Mit dem erfindungsgemässen Verfahren kann also auch "non-line-of-sight" beschichtet werden. Es kann sozusagen um die Ecke beschichtet werden. Dies soll im Fogenden anhand der Fig. 5 und der Fig. 6 erläutert werden

Fig. 5 zeigt in einer sehr vereinfachten Darstellung ein Segment einer Turbine, das gesamthaft mit dem Bezugszeichen 50 bezeichnet ist. Fig. 6 zeigt dieses Segment 50 in einer Schnittdarstellung, wobei der Schnitt parallel zu einer in Fig. 5 mit 51 bezeichneten Grundplatte erfolgt.

Die Turbine, beispielsweise eine Gasturbine umfasst üblicherweise mehrere rotierende Laufräder und stationäre Leitelemente. Sowohl die Laufräder als auch die Leitelemente umfassen jeweils eine Vielzahl von Turbinenschaufeln 52. Die Turbinenschaufeln 52 können jeweils einzeln mit ihrem Fuss auf einer gemeinsamen Achse der Turbine montiert sein oder sie können in Form von Segmenten vorgesehen sein, die jeweils mehrere Turbinenschaufeln 52 umfassen. Diese Ausgestaltung wird häufig als Cluster-Vane-Segment oder je nach Anzahl der Turbinenschaufeln als Double-Vane-Segment, Triple-Vane-Segment usw. bezeichnet.

In Fig.5 und in Fig. 6 ist in stark vereinfachter Darstellung ein solches Segment 50 einer Gasturbine dargestellt, welches zwei Turbinenschaufeln 52 umfasst, die sich jeweils von der Grundplatte 51 bis zu einer Deckplatte 53 erstrecken. Das Segment 50 kann einstückig sein oder aus mehreren Einzelteilen bestehen. Auf die Darstellung an sich bekannte Details, wie beispielsweise Kühlluftbohrungen oder -kanäle ist in den Fig. 5 und 6 aus Gründen der besseren übersicht verzichtet worden.

Bei derartigen Substraten 100 wie beispielsweise dem Segment 50 existieren geometrische Schattenbereiche oder versteckte bzw. abgedeckte Bereiche, die nicht direkt - im geometrischen Sinne - mit dem Prozessstrahl beaufschlagt werden können. Solche Bereiche sind in Fig. 6 mit dem Bezugszeichen B bezeichnet. Häufig ist es so, dass solche Bereiche B auch durch eine Rotation des Substrats 100 im Prozessstrahl oder durch eine andere Relativbewegung zwischen Prozessstrahl und Substrat nicht erreicht werden können.

Mit dem erfindungsgemässen Verfahren kann auch in solchen Bereichen B eine Beschichtung hergestellt werden, die sich im geometrischen Schatten des Prozessstrahls befinden, also nicht in der Sichtlinie des Prozessstrahls. Mit dem erfindungsgemässen Verfahren ist es folglich möglich, um Ecken, Kanten und Rundungen herum zu beschichten.

Dies ist insbesondere vorteilhaft für die Beschichtung von Turbinenschaufeln von Gasturbinen und speziell für Segmente solcher Turbinen, die zwei oder mehr Turbinenschaufeln umfassern.

## Patentansprüche

1. Verfahren zum Herstellen einer Beschichtung (10) mit kolumnarer, vorzugsweise dichter Struktur, bei welchem Verfahren ein Beschichtungsmaterial in Form von primären Korpuskel (1) mit einem Trägergas in einen thermischen Prozessstrahl injiziert wird, das Beschichtungsmaterial im Prozessstrahl in eine Damp phase überführt sowie als Kondensat in Form einer kolumnaren Beschichtung auf einem Substrat (100) abgeschieden wird und die primaren Korpuskeln durch ein Haufwerk von Partikeln (2) gebildet sind, die durch Kohäsionskräfte eines verbindenden Mediums (3) ode durch Adhäsionskräfte zusammen gehalten werden,
**dadurch gekennzeichnet, dass** die primären Korpuskeln im Prozessstrahl durch mechanische und thermische Wechselwirkung desintegriert und die Partikel dispergiert werden, so dass Beschichtungsmaterial durch thermisches Einwirken auf die einzelnen Partikel ganz oder zu einem Teil verdampft wird.

2. Verfahren nach Anspruch 1, **dadurch gekennzeichnet, dass** die primären Korpuskeln (1) durch Versprühen eines Schlickers erzeugt werden und zwei Fälle unterscheidbar sind:
**I)** das Versprühen des Schlickers wird unmittelbar vor dem Eintrag in den Prozessstrahl ausgeführt, wobei Kapillarkräfte einer Flüssigkeit die Kohäsionskräfte bilden und diese Flüssigkeit, die in de Regel ein Dispergiermittel enthält, zu einer Aufschlämmung der Partikel und Erzeugung des Schlickers verwendet worden ist, oder
**II)** es wird der Schlicker aus den Partikeln (2), einer Flussigkeit, einem Binder sowie gegebenenfalls einem Dispergiermittel hergestellt, anschliessend der versprühte Schlicker getrocknet und das sprühgetrocknete Material als Spritzpulver verwendet, wobei der Binder bei hoher Verdünnung in der Flüssigkeit des Schlickers gelöst worden ist, so dass die nach dem Trocknen durch den Binder erzeugten Kohäsionskräfte lediglich einen minimalen Zusammenhalt der Partikel bewirken.

3. Verfahren nach Anspruch 2, **dadurch gekennzeichnet, dass** beim Einsatz des Spritzpulvers der Binderanteil nach dem Trocknen 0.5 - 5 Gew%, vorzugsweise 1 - 2 Gew% beträgt und
dass für den Schlicker beispielsweise folgende Stoffe verwendet werden:
als Flüssigkeit entmineralisiertes Wasser oder ein organisches Lösungsmittel, insbesondere ein Alkohol;
als Dispergiermittel Polycarbonsäure, eine Polycarboxylat- oder Polymetacarboxylatverbindung, Polyethylenimine oder ein Aminoalkohol;
und als Binder Polyvinylalkohol, Polyvinylpyrolidin, Polysacharid, Acryl-polymere und Copolymere, Stärke, Polyvinylpropylen, Polyethylenglykole oder eine Celluloseverbindung, beispielsweise Carboxymethylcellulose, Methylcellulose oder Hydroxyethylcellulose.

4. Verfahren nach einem der Ansprüche 1 bis 3, **dadurch gekennzeichnet, dass** der thermische Prozessstrahl durch eine Flamme eines defokussierenden Plasmastrahls erzeugt wird, wobei die Eigenschaften des Prozessstrahls durch einstellbare Prozessparameter bestimmt sind, insbesondere durch die Parameter Prozessdruck, Enthalpie und Zusammensetzung eines Prozessgasgemisches.

5. Verfahren nach Anspruch 4, **dadurch gekennzeichnet, dass**
a) für den Prozessdruck ein Wert zwischen 50 und 2000 Pa, vorzugsweise zwischen 100 und 500 Pa, gewählt wird und die spezifische Enthalpie des Plasmastrahls durch Abgabe einer effektiven Leistung erzeugt wird, die empirisch zu ermitteln ist und die erfahrungsgemäss im Bereich von 20 bis 100 kW, vorzugsweise 40 bis 80 kW liegt.
b) das Prozessgas ein Gemisch von Inertgasen umfasst, insbesondere ein Gemisch von Argon Ar und Helium He, und ferner gegebenenfalls Wasserstoff, Stickstoff und/oder ein reaktives Gas umfasst, wobei das Volumenverhältnis von Ar zu He vorteilhafterweise im Bereich von 2 : 1 bis 1 : 4 liegt, und der Gesamtgasfluss im Bereich von 30 bis 150 SLPM liegt,
c) die primären Korpuskeln mit einer Förderrate zwischen 5 und 60 g/min, vorzugsweise zwischen 10 und 40 g/min injiziert werden, und
d) vorzugsweise das Substrat während des Materialauftrags relativ zu einer Wolke des verdampften Beschichtungsmaterials bewegt wird, insbesondere mit Dreh- oder Schwenkbewegungen und/oder mit translatorischen Bewegungen.

6. Verfahren nach einem der Ansprüche 1 bis 5, **dadurch gekennzeichnet, dass** ein Beschichtungsmaterial verwendet wird, dessen verdampfbarer Anteil mindestens 70 % beträgt, und dass ein Plasmastrahl mit ausreichend hoher spezifischer Enthalpie erzeugt wird, so dass beim Verdampfen mindestens 5 %, vorzugsweise mindestens 50 % des Beschichtungsmaterials in die Dampfphase übergeht.

7. Verfahren nach einem der vorangehenden Ansprüche **dadurch gekennzeichnet, dass** Bereiche (B) des Substrats (100) beschichtet werden, die sich im geometrischen Schatten des Prozessstrahls befinden.

8. Verfahren nach einen der vorangehenden Ansprüche, bei welchem das Substrat eine Turbinenschaufel (52) oder ein Segment (50) mit mindestens zwei Turbinenschaufeln (52) ist.

9. Verfahren nach einen der vorangehenden Ansprüche, wobei das Pulver eine Schüttung von Korpuskeln ist, die jeweils durch ein Haufwerk oder Agglomerat von Partikeln gebildet sind, und dass die Partikel durch Kohäsionskräfte eines Binders, insbesondere eines Binders gemäss Anspruch 3, oder durch Adhäsionskräfte verbunden sind, wobei der Binderanteil 0.5 - 5 Gew%, vorzugsweise 1 - 2 Gew% beträgt, wobei für die Partikel der primären Korpuskeln die Durchmesser im Bereich zwischen 0.1 und 5 µm liegen, und wobei die Durchmesser der primären Korpuskel kleiner als 35 µm und grösser als rund 5 µm sind..

10. Verfahren nach Anspruch 9, **dadurch gekennzeichnet, dass** als Beschichtungsmaterial oxidkeramische Werkstoffe verwendet werden, dass Werkstoffe Oxide von Zr, Al, Ti, Cr, Ca, Mg, Si, Ti, Y, La, Ce, Sc, Pr, Dy, Gd, Sm, Mn, Sr oder Kombinationen dieser chemischen Elemente sind.

11. Verfahren nach Anspruch 9 oder 10, **dadurch gekennzeichnet, dass** als Beschichtungsmaterial ein für eine Wärmedämmschicht TBC geeigneter Werkstoff verwendet wird, insbesondere eines der folgenden Oxide oder eine Kombination dieser Oxide:
Zirkoniumoxid ZrO₂, Yttriumoxid Y₂O₃, Ytterbiumoxid Yb₂O₅, Dysprosiumoxid Dy₂O₃, Gadoliniumoxid Gd₂O₃, Ceriurnoxid CeO₂, Magnesiumoxid MgO, Calciumoxid CaO, Europiumoxid Eu₂O₃, Erbiumoxid Er₂O₃, Scandiumoxid Sc₂O₃, Lanthanidoxide und Actinideoxide, wobei diese Werkstoffe in einer voll- oder teilstabilisierten Form vorliegen können, und bei einer TBC aus ZrO₂, folgende Stabilisatoren und Konzentrationsbereiche vorgesehen sind:
a) Y₂O₃ - 4-20 Gew%, vorzugsweise 6-9 Gew%;
b) Yb₂O₅ - 4-20 Gew%, vorzugsweise 10-16 Gew%;
c) Y₂O₃ und Yb₂O₅ -- 4-20 Gew%, vorzugsweise 4-16 Gew%;
d) Y₂O₃ und Yb₂O₅ und Sc₂O₃ oder Lanthanidoxide - 4-20 Gew%, vorzugsweise 4-16 Gew%.

12. Verfarhen nach einem der Ansprüche 9 bis 11, **dadurch gekennzeichnet, dass** die Partikel in den Korpuskeln eine homogene oder heterogene Mischung mit gleichen bzw. ungleichen Werkstoffen bilden.

13. Verfahren nach einem der Ansprüche 9 bis 12, **dadurch gekennzeichnet, dass** die Partikel in den Korpuskeln eine Mischung von Stoffen bilden, die im Prozessstrahl nach dem Verdampfen zumindest teilweise mit einander oder mit einem reaktiven Gas des Prozessgasgemisches chemisch reagieren und beim Beschichten als Reaktionsprodukte auskondensiert werden.

## Claims

1. A method for the manufacture of a coating (10) having a columnar structure, preferably a dense structure, in which method a coating material in the form of primary corpuscles (1) is injected with a carrier gas into a thermal process beam, the coating material is transferred into a vapor phase in the process beam and is deposited as a condensate in the form of a columnar coating on a substrate (100) and the primary corpuscles are formed by an agglomerate of particles (2) which are held together by cohesive forces of a connecting medium (3) or by adhesive forces,
**characterized in that** the primary corpuscles are disintegrated in the process beam by mechanical and thermal interaction and the particles are dispersed so that coating material is vaporized fully or partly by thermal action on the individual particles.

2. A method in accordance with claim 1, **characterized in that** the primary corpuscles (1) are generated by spraying of a slurry, and **in that** two cases can be distinguished:
I) the spraying of the slurry is carried out directly before the entry into the process beam, with capillary forces of a liquid forming the cohesive forces and this liquid, which as a rule contains a dispersing agent, having been used for a slurrying of the particles and for the generation of the slurry; or
II) the slurry is manufactured from the particles (2) from a liquid, from a binder, and, optionally, from the dispersing agent, the sprayed slurry is subsequently dried and the spray-dried material is used as a spray powder, with the binder having been dissolved in the liquid of the slurry at a high dilution so that the cohesive forces generated by the binder after the drying only effect a minimal holding together of the particles.

3. A method in accordance with claim 2, **characterized in that** the binder portion after the drying amounts to 0.5 to 5% by weight, preferably to 1-2% by weight, on the use of the spray powder; and **in that** the following materials are used, for example, for the slurry:
as the **liquid**, demineralized water or an organic solvent, in particular an alcohol;
as the **dispersing agent**, polycarbonic acid, a polycarboxylate compound or a polymetacarboxylate compound, polyethyleneimines or an amino alcohol;
and as the **binder**, polyvinyl alcohol, polyvinylpyrrolidine, polysaccharide, acrylic polymers and copolymers, starch, polyvinyl propylene, polyethylene glycols or a cellulose compound, for example carboxy methyl cellulose, methyl cellulose or hydroxyethylcellulose.

4. A method in accordance with claim any one of the claims 1 to 3, **characterized in that** the thermal process beam is generated by a plume of a defocusing plasma beam, with the properties of the process beam being determined by adjustable process parameters, in particular by the parameters of process pressure, enthalpy and composition of a process gas mixture.

5. A method in accordance with claim 4, **characterized in that**
a) a value is selected for the process pressure between 50 and 2,000 Pa, preferably between 100 and 500 Pa and the specific enthalpy of the plasma beam is generated by delivering an effective power which is to be determined empirically and which lies, according to experience, in a range from 20 to 100 kW, preferably 40 to 80 kW;
b) the process gas includes a mixture of insert gases, in particular a mixture of argon Ar and helium He, and furthermore, optionally, hydrogen, nitrogen and/or a reactive gas, with the volume ratio of Ar to He advantageously lying in the range from 2:1 to 1:4 and the total gas flow lying in the range from 30 to 150 SLPM;
c) the primary corpuscles are injected at a conveying rate between 5 and 60 g/min, preferably between 10 and 40 g/min; and
d) the substrate is preferably moved relative to a cloud of the vaporized material during the material application, in particular by rotary or pivot movements and/or by movements in translation.

6. A method in accordance with any one of the claims 1 to 5, **characterized in that** a coating material is used whose portion which can be vaporized amounts to at least 70%; and **in that** a plasma beam with sufficiently high specific enthalpy is generated or that at least 5% of the coating material, preferably at least 50%, is transferred into the vapor phase during vaporization.

7. A method in accordance with any one of the preceding claims, **characterized in that** regions (B) of the substrate (200) are coated which are located in the geometrical shadow of the process beam.

8. A method in accordance with any one of the preceding claims, wherein the substrate is a turbine vane (52) or a segment (50) having at least two turbine vanes (52).

9. A method in accordance with any one of the preceding claims, wherein the powder is an aggregate of corpuscles which are formed in each case by an agglomerate of particles; and in that the particles are connected by cohesive forces of a binder, in particular of a binder in accordance with claim 3, or by adhesive forces, with the binder portion amounting to 0.5-5% by weight, preferably 1-2% by weight; wherein the diameters lie in the range between 0.1 and 5 µm for the particles of the primary corpuscles; and wherein the diameters of the primary corpuscles are smaller than 35 µm and larger than 5 µm.

10. A method in accordance with claim 9, **characterized in that** oxide ceramic materials are used as the coating materials; **in that** the materials are oxides of Zr, Al, Ti, Cr, Ca, Mg, Si, Ti, Y, La, Ce, Sc, Pr, Dy, Gd, Sm, Mn, Sr or combination of these chemical elements.

11. A method in accordance with claim 9 or claim 10, **characterized in that** a material suitable for a thermal barrier coating TBC is used as the coating material, in particular one of the following oxides or a combination of these oxides: zirconium oxide ZrO₂, yttrium oxide Y₂O₃, ytterbium oxide Yb₂O₅, dysprosium oxide Dy₂O₃, gadolinium oxide Gd₂O₃, cerium oxide CeO₂, magnesium oxide MgO, calcium oxide CaO, europium oxide Eu₂O₃, erbium oxide Er₂O₃ scandium oxide Sc₂O₃, lanthanide oxides and actinide oxides, with these materials being able to be present in a fully stabilized or partly stabilized form and with the following stabilizers and concentration ranges being provided with a TBC of ZrO₂:
a) Y₂O₃ - 4-20% by weight, preferably 6-9% by weight;
b) Yb₂O₅ - 4-20% by weight, preferably 10-16% by weight;
c) Y₂O₃ and Yb₂O₅ - 4-20% by weight, preferably 4-16% by weight;
d) Y₂O₃ and Yb₂O₅ and Sc₂O₃ or lanthanide oxides - 4-20% by weight, preferably 4-16% by weight.

12. A method in accordance with any one of the claims 9 to 11, **characterized in that** the particles in the corpuscles form a homogeneous or heterogeneous mixture with materials which are the same or different.

13. A method in accordance with any one of the claims 9 to 12, **characterized in that** the particles in the corpuscles form a mixture of materials which react chemically in the process beam after the vaporization at least partly with one another or with a reactive gas of the process gas mixture and are condensed out as reaction products during the coating.

## Revendications

1. Procédé de fabrication d'un revêtement (10) avec une structure colonnaire, de préférence dense, dans lequel un matériau de revêtement est injecté sous la forme de corpuscules primaires (1) avec un gaz porteur dans un jet de process thermique, le matériau de revêtement est transféré vers une phase de vapeur dans le jet de process, ainsi que séparé, en tant que condensat sous la forme d'un revêtement colonnaire, sur un substrat (100) et les corpuscules primaires sont constitués d'un mélange de particules (2) maintenues ensemble par les forces de cohésion d'un milieu liant (3) ou par des forces d'adhérence, **caractérisé en ce que** les corpuscules primaires sont désintégrés dans le jet de process par une interaction mécanique et thermique et les particules sont dispersées de façon à ce que le matériau de revêtement soit vaporisé entièrement ou partiellement grâce à une action thermique sur les différentes particules.

2. Procédé selon la revendication 1 **caractérisé en ce que** les corpuscules primaires (1) sont produits par pulvérisation d'une barbotine et deux cas sont possibles:
I) la pulvérisation de la barbotine est réalisée directement avant l'entrée du jet de process, moyennant quoi les forces capillaires d'un liquide constituent les force de cohésion et ce liquide, qui contient généralement un moyen de dispersion, est utilisé pour la mise en suspension des particules et la production de la barbotine, ou
II) la barbotine constituée des particules (2), d'un liquide, d'un liant ainsi que, le cas échéant, d'un moyen de dispersion, est fabriquée puis la barbotine pulvérisée est séchée et le matériau pulvérisé et séché est utilisé en tant que poudre à injecter, moyennant quoi le liant est dissous dans le liquide de la barbotine avec une forte dilution, de façon à ce que les forces de cohésion générées par le liant après le séchage produisent seulement une faible cohésion des particules.

3. Procédé selon la revendication 2, **caractérisé en ce que**, lors de l'utilisation de la poudre à injecter, la proportion de liant après le séchage est de 0,5 à 5 % en poids, de préférence de 1 à 2% en poids et **en ce que** pour la barbotine sont utilisées par exemple les substances suivantes:
en tant que liquide, de l'eau déminéralisée ou un solvant organique, plus particulièrement un alcool;
en tant que moyen de dispersion un acide polycarboné, un composé de type polycarboxylate ou polymétacarboxylate, de la polyéthylènimine ou un alcool aminé;
et en tant que liant de l'alcool polyvinylique, de la polyvinylpyrolidine, du polysaccharide, des polymères et copolymères acryliques, de l'amidon, du polyvinylpropylène, des polyéthylène glycols, ou un composé de type cellulose, par exemple de la cellulose carboxyméthylique, de la cellulose méthylique ou de la cellulose hydroxyéthylique.

4. Procédé selon l'une des revendications 1 à 3, **caractérisé en ce que** le jet de process thermique est produit par une flamme d'un jet de plasma défocalisant, moyennant quoi les propriétés du jet de process sont déterminées par des paramètres de process réglables, plus particulièrement par les paramètres pression de process, enthalpie et composition d'un mélange de gaz de process.

5. Procédé selon la revendication 4, **caractérisé en ce que**
a) pour la pression de process, une valeur entre 50 et 2000 Pa, de préférence entre 100 et 500 Pa, est choisie et l'enthalpie spécifique du jet de plasma est produite par la production d'une pression efficace, qui doit être déterminée de manière empirique et qui est, par expérience, de l'ordre de 20 à 100 kW, de préférence de 40 à 80 kW,
b) le gaz de process comprend un mélange de gaz inertes, plus particulièrement un mélange d'argon Ar et d'hélium He, et en outre le cas échéant de l'hydrogène, de l'azote et/ou un gaz réactif, moyennant quoi le rapport de volume entre Ar et He est de préférence de l'ordre de 2:1 à 1:4 et le flux total de gaz est de l'ordre de 30 à 150 SLPM,
c) les corpuscules primaires sont injectés avec un débit entre 5 et 60 g/min, de préférence entre 10 et 40 g/min et
d) de préférence le substrat est déplacé pendant l'application du matériau par rapport à un nuage de matériau de revêtement vaporisé, plus particulièrement avec des mouvements rotatifs ou pivotants et/ou avec des mouvements de translation.

6. Procédé selon l'une des revendications 1 à 5, **caractérisé en ce qu'**un matériau de revêtement est utilisé, dont la part vaporisée est d'au moins 70% et **en ce qu'**un jet de plasma avec une enthalpie spécifique est généré, de façon à ce que lors de la vaporisation au moins 5%, de préférence au moins 50% du matériau de revêtement passent dans la phase vapeur.

7. Procédé selon l'une des revendications précédentes, **caractérisé en ce que** des zones (B) du substrat (100) qui se trouvent dans l'ombre géométrique du jet de process sont revêtues.

8. Procédé selon l'une des revendications précédentes, dans lequel le substrat est une pale de turbine (52) ou un segment (50) avec au moins deux pales de turbines (52).

9. Procédé selon l'une des revendications précédentes, moyennant quoi la poudre est un ensemble de corpuscules en vrac qui sont formés d'un mélange ou d'un agglomérat de particules et en ce que les particules sont liées par des forces de cohésion d'un liant, plus particulièrement d'un liant selon la revendication 3, ou par des forces d'adhérence et moyennant quoi la part de liant est de 0,5 à 5% en poids, de préférence de 1 à 2% en poids, moyennant quoi pour les particules des corpuscules primaires, les diamètres sont de l'ordre de 0,1 à 5 µm et moyennant quoi les diamètres des corpuscules primaires sont inférieurs à 35 µm et supérieurs à 5 µm.

10. Procédé selon la revendication 9, **caractérisé en ce que**, en tant que matériau de revêtement, des matériaux céramiques oxydes sont utilisés, **en ce que** les matériaux sont des oxydes de Zr, Al, Ti, Cr, Ca, Mg, Si, Ti, Y, La, Ce, Sc, Pr, Dy, Gd, Sm, Mn, Sr ou des combinaisons de ces éléments chimiques.

11. Procédé selon la revendication 9 ou 10, **caractérisé en ce que**, en tant que matériau de revêtement, un matériau adapté pour une couche d'isolation thermique TBC est utilisé, plus particulièrement un des oxydes suivants ou une combinaison de ces oxydes: oxyde de zirconium ZrO₂, oxyde d'yttrium Y₂O₃, oxyde d'ytterbium Yb₂O₅, oxyde de dysprosium Dy₂O₃, oxyde de gadolinium Gd₂O₃, oxyde de cérium CeO₂, oxyde de magnésium MgO, oxyde de calcium CaO, oxyde d'europium Eu₂O₃, oxyde d'erbium Er₂O₃, oxyde de scandium Sc₂O₃, des oxydes de lanthanides et des oxydes d'actinides, moyennant quoi des matériaux peuvent se présenter sous une forme entièrement ou partiellement stabilisée et pour une TBC en ZrO₂, les stabilisateurs et intervalles de concentrations suivants sont prévus:
a) Y₂O₃ - 4 à 20% en poids, de préférence 6 à 9% en poids
b) Yb₂O₅ - 4 à 20% en poids, de préférence 10 à 16% en poids
c) Y₂O₃ et Yb₂O₅ - 4 à 20% en poids, de préférence 4 à 16% en poids
d) Y₂O₃ et Yb₂O₅ et Sc₂O₃ ou oxydes de lanthanides - 4 à 20% en poids, de préférence 4 à 16% en poids.

12. Procédé selon l'une des revendications précédentes 9 à 11, **caractérisé en ce que** les particules dans les corpuscules forment un mélange homogène ou hétérogène avec des matériaux semblables ou dissemblables.

13. Procédé selon l'une des revendications 9 à 12, **caractérisé en ce que** les particules dans les corpuscules forment un mélange de matériaux qui réagissent chimiquement, dans le jet de process après la vaporisation, au moins partiellement les uns avec les autres ou avec un gaz réactif et se condensent sous la forme de produits de réaction lors du revêtement.
